(19) Europäisches Patentamt
European Patent Office
Office européen des brevets

(11) **EP 4 531 450 A1**

(12) **EUROPEAN PATENT APPLICATION**
published in accordance with Art. 153(4) EPC

(43) Date of publication:
**02.04.2025 Bulletin 2025/14**

(21) Application number: 23863286.3

(22) Date of filing: **03.01.2023**

(51) International Patent Classification (IPC):
*H04W 28/02* (2009.01)    *H04W 36/14* (2009.01)
*H04W 36/36* (2009.01)    *H04W 88/06* (2009.01)

(52) Cooperative Patent Classification (CPC):
H04W 28/02; H04W 36/14; H04W 36/36;
H04W 88/06

(86) International application number:
**PCT/KR2023/000058**

(87) International publication number:
**WO 2024/053802 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.09.2022 KR 20220113599**

(71) Applicant: **LG Electronics Inc.**
**Yeongdeungpo-gu**
**Seoul 07336 (KR)**

(72) Inventors:
• **CHO, Chaeguk**
  **Seoul 06772 (KR)**
• **PARK, Junsang**
  **Seoul 06772 (KR)**

(74) Representative: **Vossius & Partner**
**Patentanwälte Rechtsanwälte mbB**
**Siebertstrasse 3**
**81675 München (DE)**

(54) **SIGNAL PROCESSING DEVICE AND VEHICLE COMMUNICATION DEVICE INCLUDING SAME**

(57)     A signal processing device and a vehicle communication device including the same are disclosed. The signal processing device according to an embodiment of the present disclosure is a signal processing device in a vehicle and includes: a first interface configured to exchange data with a first communication module to perform communication of a first communication standard based on an unlicensed frequency band; a second interface configured to exchange data with a second communication module to perform communication of a second communication standard based on a licensed frequency band; and a handover selector configured to, while transmitting vehicle data to a server or a mobile terminal through the second communication module, determine switching to the first communication module based on a strength of a communication signal of the first communication standard. Accordingly, external transfer of vehicle data may be efficiently performed.

FIG. 1

**Description**

**BACKGROUND**

**1. Technical Field**

The present disclosure relates to a signal processing device and a vehicle communication device including the same, and more particularly to a signal processing device capable of efficiently performing external transfer of vehicle data or a vehicle communication device including the signal processing device.

**2. Description of the Related Art**

A vehicle is a machine that allows a user to move in a desired direction. A typical example of the vehicle is an automobile.

Meanwhile, a signal processing device of the vehicle is mounted in the vehicle for user convenience.

The development of connected car services leads to a sharp increase in the amount of data transmission in the vehicle, thereby increasing the burden of communication cost of mobile communication.

A network configuration changes frequently and rapidly due to the mobility of vehicles, such that Wi-Fi usability in a vehicle decreases, and communication greatly depends on mobile communication.

Meanwhile, in the case in which data transmission is performed without considering Wi-Fi network performance and vehicle mobility, there may be a failure or delay in data transmission due to a network error.

Meanwhile, regarding multi-path communication, Korean Patent No. 10-1680278 (related art 1) discloses a network apparatus and terminal for multi-path communication, an operating method of the same, and a program for implementing the operating method.

Particularly, related art 1 discloses a method for performing multi-path communication by a terminal through a gateway, the method including: storing a whitelist including applications to be subject to multi-path communication; and generating the gateway and at least one path, using at least one multi-communication interface, when a first application included in the whitelist is executed.

However, related art 1 has a drawback in that considering that a server does not support MPTCP, a multi-path transmission method through Cellular/Wi-Fi networks is used with a proxy (gateway) located at a network stage between a terminal and the server, such that it is required to further install the proxy.

In addition, it is required to reassemble the session so that the proxy may act as a server in communication with the terminal and as a client in communication with the server, thereby causing a network delay.

**SUMMARY**

It is an objective of the present disclosure to provide a signal processing device capable of efficiently performing external transfer of vehicle data or a vehicle communication device including the signal processing device.

It is another objective of the present disclosure to provide a signal processing device capable of minimizing a transmission delay when a communication method changes during external transfer of vehicle data or a vehicle communication device including the signal processing device.

It is yet another objective of the present disclosure to provide a signal processing device capable of minimizing cost during external transfer of vehicle data or a vehicle communication device including the signal processing device.

In accordance with an aspect of the present disclosure, the above and other objectives can be accomplished by providing a signal processing device which is a signal processing device in a vehicle and includes: a first interface configured to exchange data with a first communication module to perform communication of a first communication standard based on an unlicensed frequency band; a second interface configured to exchange data with a second communication module to perform communication of a second communication standard based on a licensed frequency band; and a handover selector configured to, while transmitting vehicle data to a server or a mobile terminal through the second communication module, determine switching to the first communication module based on a strength of a communication signal of the first communication standard.

Meanwhile, in the case in which communication based on the first communication standard is available based on the strength of the communication signal of the first communication standard, the handover selector may be configured to determine switching to the first communication module for a packet, transmitted based on the second communication standard, to be transmitted based on the first communication standard.

Meanwhile, the signal processing device may further include a packet path controller configured to transmit the packet, transmitted based on the second communication standard, based on the first communication standard through the first interface.

Meanwhile, the signal processing device may further include a packet converter configured to convert a header of the packet, transmitted based on the second communication standard, into interface data based on the first communication standard.

Meanwhile, in the case in which the first communication module is activated based on switching to the first communication standard by the handover selector, an application for transmitting the vehicle data may be configured to connect the server or the mobile terminal to a session.

Meanwhile, when switching from the second communication module to the first communication module, the handover selector may be configured to maintain a session of the second communication standard.

Meanwhile, after switching from the second communication module to the first communication module, the handover selector may be configured to determine switching back from the first communication module to the second communication module based on a strength of a communication signal of the second communication standard or the strength of the communication signal of the first communication standard.

Meanwhile, the signal processing device may further include a packet path controller which, in response to switching back from the first communication module to the second communication standard, may be configured to control the packet to be transmitted using the maintained session of the second communication standard.

Meanwhile, the handover selector may be configured to determine switching to the first communication module based further on at least one of the strength of the communication signal of the second communication standard, a remaining amount of the vehicle data or a validity period of the vehicle data.

Meanwhile, when selecting vehicle data to be transmitted, the handover selector may be configured to select the data to be transmitted within a maximum size transmittable in a time slot.

Meanwhile, in the case in which the validity period of the vehicle data to be transmitted is not met while transmitting the vehicle data using the first communication module after switching to the first communication module, the handover selector may be configured to determine switching again from the first communication module to the second communication module.

Meanwhile, the handover selector may be configured to select the first communication module or the second communication module based on the validity period of the vehicle data to be transmitted.

Meanwhile, the packet path controller may be configured to control an amount of data, which is proportional to the strength of the communication signal of the first communication standard, to be transmitted in the time slot.

In accordance with another aspect of the present disclosure, the above and other objectives can be accomplished by providing a signal processing device which is a signal processing device in a vehicle and includes: a first interface configured to exchange data with a first communication module to perform communication of a first communication standard based on an unlicensed frequency band; a second interface configured to exchange data with a second communication module to perform communication of a second communication standard based on a licensed frequency band; and a handover selector configured to, while transmitting vehicle data to a server or a mobile terminal through the first communication module, determine switching to the second communication module based on a validity period of the vehicle data.

Meanwhile, in the case in which the validity period of the vehicle data is not met while transmitting the vehicle data using the first communication module, the handover selector may be configured to determine switching from the first communication module to the second communication module.

Meanwhile, the signal processing device may further include a packet path controller configured to control a packet, transmitted based on the first communication standard, to be transmitted based on the second communication standard through the second interface.

Meanwhile, the signal processing device may further include a packet converter configured to convert interface data, transmitted based on the first communication standard, into a header of a packet based on the second communication standard.

Meanwhile, while transmitting the vehicle data using the first communication module, an application for transmitting the vehicle data may be configured to connect the server or the mobile terminal to a session.

In accordance with yet another aspect of the present disclosure, the above and other objectives can be accomplished by providing a vehicle communication device including: a first communication module configured to perform communication of a first communication standard based on an unlicensed frequency band; a second communication module configured to perform communication of a second communication standard based on a licensed frequency band; and a signal processing device configured to determine switching to the first communication module based on a communication signal of a first communication standard.

**EFFECTS OF THE DISCLOSURE**

A signal processing device according to an embodiment of the present disclosure is a signal processing device in a vehicle and includes: a first interface configured to exchange data with a first communication module to perform communication of a first communication standard based on an unlicensed frequency band; a second interface configured to exchange data with a second communication module to perform communication of a second communication standard based on a licensed frequency band; and a handover selector configured to, while transmitting vehicle data to a server or a mobile terminal through the second communication module, determine switching to the first communication module based on a strength of a communication signal of the first communication standard. Accordingly, external transfer of vehicle data may be efficiently performed. In addition, cost for external transfer of vehicle data may be minimized.

Meanwhile, in the case in which communication based on the first communication standard is available based on the strength of the communication signal of the first communication standard, the handover selector may be configured to determine switching to the first communication module for a packet, transmitted based on the second communication standard, to be transmitted based on the first communication standard. Accordingly, external transfer of vehicle data may be efficiently performed. In addition, cost for external transfer of vehicle data may be minimized.

Meanwhile, the signal processing device may further include a packet path controller configured to transmit the packet, transmitted based on the second communication standard, based on the first communication standard through the first interface. Accordingly, it is possible to minimize a transmission delay that occurs when a communication scheme changes during external transfer of vehicle data.

Meanwhile, the signal processing device may further include a packet converter configured to convert a header of the packet, transmitted based on the second communication standard, into interface data based on the first communication standard. Accordingly, it is possible to minimize a transmission delay that occurs when a communication scheme changes during external transfer of vehicle data.

Meanwhile, in the case in which the first communication module is activated based on switching to the first communication standard by the handover selector, an application for transmitting the vehicle data may be configured to connect the server or the mobile terminal to a session. Accordingly, external transfer of vehicle data may be efficiently performed.

Meanwhile, when switching from the second communication module to the first communication module, the handover selector may be configured to maintain a session of the second communication standard. Accordingly, it is possible to minimize a transmission delay that occurs when a communication scheme changes during external transfer of vehicle data.

Meanwhile, after switching from the second communication module to the first communication module, the handover selector may be configured to determine switching back from the first communication module to the second communication module based on a strength of a communication signal of the second communication standard or the strength of the communication signal of the first communication standard. Accordingly, external transfer of vehicle data may be efficiently performed.

Meanwhile, the signal processing device may further include a packet path controller which, in response to switching back from the first communication module to the second communication standard, may be configured to control the packet to be transmitted using the maintained session of the second communication standard. Accordingly, it is possible to minimize a transmission delay that occurs when a communication scheme changes during external transfer of vehicle data.

Meanwhile, the handover selector may be configured to determine switching to the first communication module based further on at least one of the strength of the communication signal of the second communication standard, a remaining amount of the vehicle data or a validity period of the vehicle data. Accordingly, external transfer of vehicle data may be efficiently performed. In addition, cost for external transfer of vehicle data may be minimized.

Meanwhile, when selecting vehicle data to be transmitted, the handover selector may be configured to select the data to be transmitted within a maximum size transmittable in a time slot. Accordingly, external transfer of vehicle data may be efficiently performed.

Meanwhile, in the case in which the validity period of the vehicle data to be transmitted is not met while transmitting the vehicle data using the first communication module after switching to the first communication module, the handover selector may be configured to determine switching again from the first communication module to the second communication module. Accordingly, external transfer of vehicle data may be efficiently performed.

Meanwhile, the handover selector may be configured to select the first communication module or the second communication module based on the validity period of the vehicle data to be transmitted. Accordingly, external transfer of vehicle data may be efficiently performed.

Meanwhile, the packet path controller may be configured to control an amount of data, which is proportional to the strength of the communication signal of the first communication standard, to be transmitted in the time slot. Accordingly, external transfer of vehicle data may be efficiently performed. In addition, cost for external transfer of vehicle data may be minimized.

A signal processing device according to another embodiment of the present disclosure is a signal processing device in a vehicle and includes: a first interface configured to exchange data with a first communication module to perform communication of a first communication standard based on an unlicensed frequency band; a second interface configured to exchange data with a second communication module to perform communication of a second communication standard based on a licensed frequency band; and a handover selector configured to, while transmitting vehicle data to a server or a mobile terminal through the first communication module, determine switching to the second communication module based on a validity period of the vehicle data. Accordingly, external transfer of vehicle data may be efficiently performed.

Meanwhile, in the case in which the validity period of the vehicle data is not met while transmitting the vehicle data using the first communication module, the handover selector may be configured to determine switching from the first communication module to the second communication module. Accordingly, external transfer of vehicle data may be efficiently performed.

Meanwhile, the signal processing device may further include a packet path controller configured to control a packet, transmitted based on the first communication standard, to be transmitted based on the second communication standard through the second interface. Accordingly, external transfer of vehicle data may be efficiently performed.

Meanwhile, the signal processing device may further include a packet converter configured to convert interface data, transmitted based on the first communication standard, into a header of a packet based on the second communication standard. Accordingly, it is possible to minimize a transmission delay that occurs when a communication scheme changes during external transfer of vehicle data.

Meanwhile, while transmitting the vehicle data using the first communication module, an application for transmitting the vehicle data may be configured to connect the server or the mobile terminal to a session. Accordingly, external transfer of vehicle data may be efficiently performed. In addition, cost for external transfer of vehicle data may be minimized.

A vehicle communication device according to yet another embodiment of the present disclosure includes: a first communication module configured to perform communication of a first communication standard based on an unlicensed frequency band; a second communication module configured to perform communication of a second communication standard based on a licensed frequency band; and a signal processing device configured to determine switching to the first communication module based on a communication signal of a first communication standard. Accordingly, external transfer of vehicle data may be efficiently performed. In addition, cost for external transfer of vehicle data may be minimized.

## BRIEF DESCRIPTION OF THE DRAWINGS

FIG. 1 is a view showing an example of the exterior and interior of a vehicle;

FIGS. 2A to 2C are diagrams illustrating various architectures of a vehicle communication gateway according to an embodiment of the present disclosure;

FIG. 3 is an exemplary internal block diagram of a signal processing device of FIG. 2A;

FIG. 4A is a diagram illustrating an example of an arrangement of a vehicle display apparatus in a vehicle according to an embodiment of the present disclosure;

FIG. 4B is a diagram illustrating another example of an arrangement of a vehicle display apparatus in a vehicle according to an embodiment of the present disclosure;

FIG. 5 is an internal block diagram illustrating the vehicle display apparatus of FIG. 4B;

FIG. 6 is an internal block diagram illustrating an example of a vehicle communication device;

FIG. 7 is an internal block diagram illustrating another example of a vehicle communication device;

FIG. 8 is a diagram illustrating an example of a vehicle communication system according to an embodiment of the present disclosure;

FIG. 9 is an exemplary internal block diagram illustrating a vehicle communication device according to an embodiment of the present disclosure;

FIG. 10 is a flowchart illustrating a method of operating a vehicle communication device according to an embodiment of the present disclosure; and

FIGS. 11 to 14C are diagrams referred to in the description of FIG. 10.

## DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

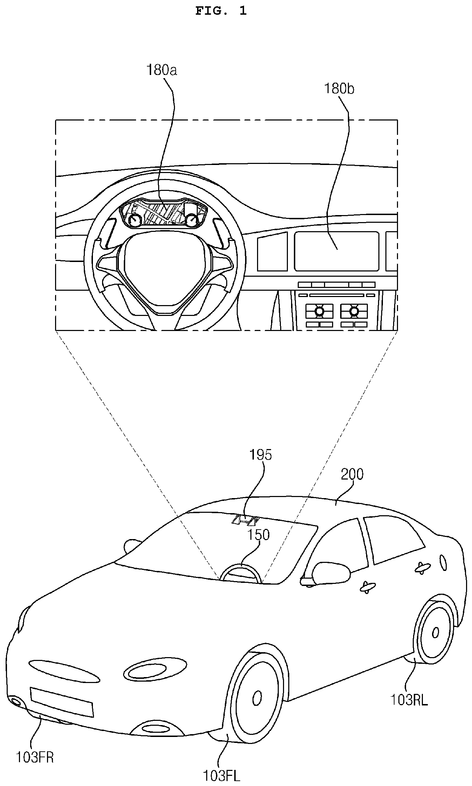

FIG. 1 is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

Meanwhile, the vehicle 200 described in this specification may be a concept including all of a vehicle having an engine as a power source, a hybrid vehicle having an engine and an electric motor as a power source, and an electric vehicle having an electric motor as a power source.

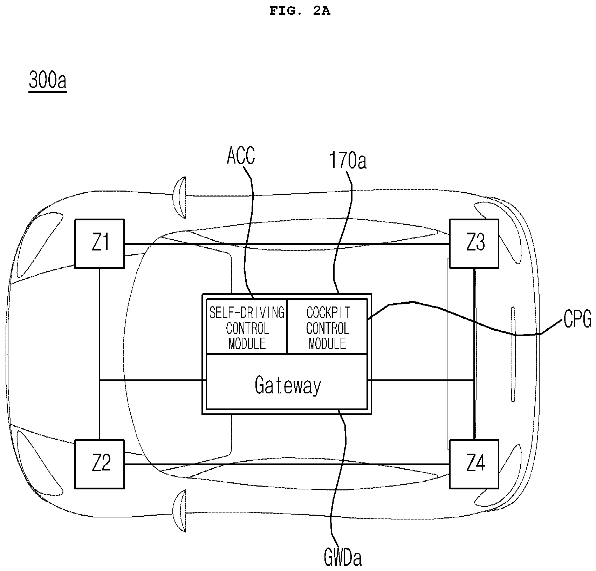

FIGS. 2A to 2C are diagrams illustrating various architectures of a vehicle communication gateway according to an embodiment of the present disclosure.

First, FIG. 2A is a diagram illustrating a first architecture of a vehicle communication gateway according to an embodiment of the present disclosure.

Referring to the drawing, the first architecture 300a may correspond to a zone-based architecture.

Accordingly, in-vehicle sensor devices and processors may be mounted in each of a plurality of zones Z1 to Z4, and a signal processing device 170a including a vehicle communication gateway GWDa may be disposed at the center of the plurality of zones Z1 to Z4.

Meanwhile, the signal processing device 170a may further include an autonomous driving control module ACC, a cockpit control module CPG, etc., in addition to the vehicle communication gateway GWDa.

The vehicle communication gateway GWDa in the signal processing device 170a may be a High Performance Computing (HPC) gateway.

That is, as an integrated HPC gateway, the signal processing device 170a of FIG. 2A may exchange data with an external communication module (not shown) or processors (not shown) in the plurality of zones Z1 to Z4.

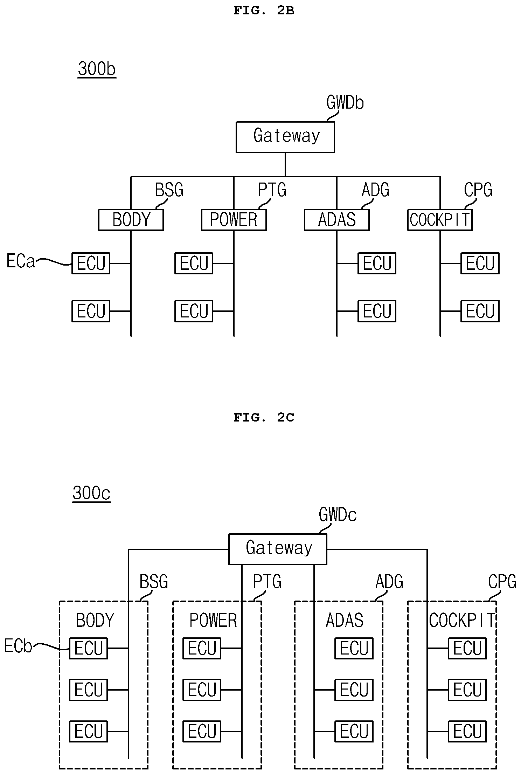

FIG. 2B is a diagram illustrating a second architecture of a vehicle communication gateway according to an embodiment of the present disclosure.

Referring to the drawing, a second architecture 300b may correspond to a domain integrated architecture.

Accordingly, a body chassis control module (BSG), a power control module (PTG), an ADAS control module (ADG), and a cockpit control module (CPG) are connected in parallel to a gateway GWDb, and a plurality of processors ECU may be electrically connected to the respective modules BSG, PTG, ADG, and CPG.

Meanwhile, the respective processors ECU may be connected to the gateway GWDb while being integrated therein.

Meanwhile, the signal processing device 170 including the gateway GWDb of FIG. 2B may function as a domain integrated signal processing device.

FIG. 2C is a diagram illustrating a third architecture of a vehicle communication gateway according to an embodiment of the present disclosure.

Referring to the drawing, a third architecture 300c may correspond to a distributed architecture.

Accordingly, the body chassis control module (BSG), the power control module (PTG), the ADAS control module (ADG), and the cockpit control module (CPG) are connected in parallel to a gateway GWDc, and particularly a plurality of processors ECU in the respective control modules may be electrically connected in parallel to the gateway GWDc.

Upon comparison with FIG. 2B, the third architecture has a difference in that the respective processors ECU are connected directly to the gateway GWDc without being connected to another module.

Meanwhile, the signal processing device 170 including the gateway GWDc of FIG. 2C functions as a distributed signal processing device.

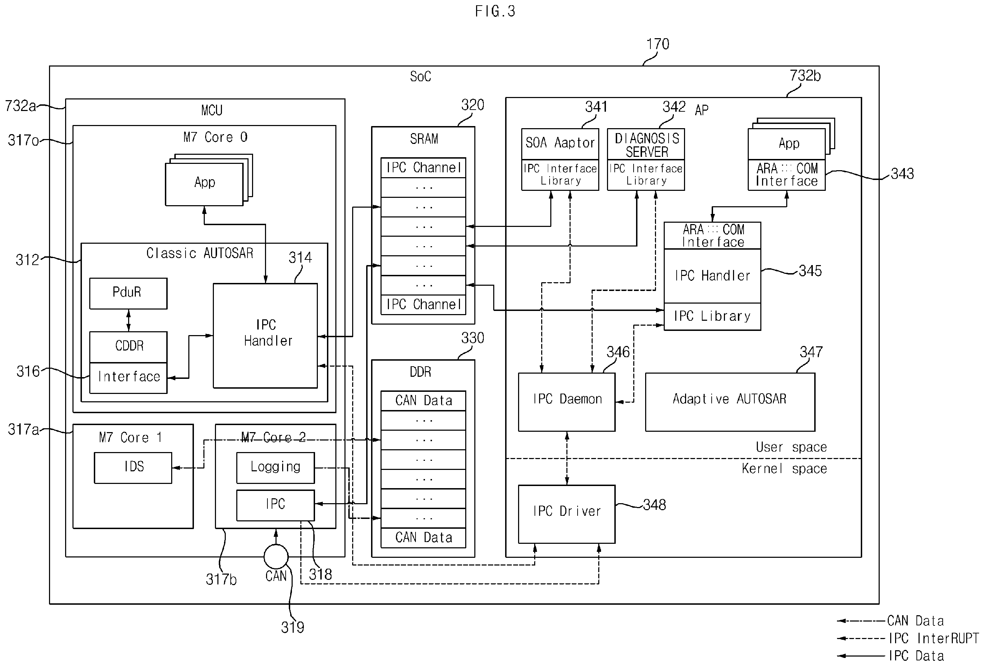

FIG. 3 is an exemplary internal block diagram of a signal processing device of FIG. 2A.

Referring to the drawing, the signal processing device 170 according to an embodiment of the present disclosure includes: a first processor 732a, which based on a first communication scheme, is configured to receive a first message including a sensor signal in a vehicle and to perform signal processing on the received first message; and a second processor 732b, which based a second communication scheme, is configured to receive a second message including a communication message received from an external source and to perform signal processing of the received second message.

In this case, the second communication scheme may have a faster communication speed or a wider bandwidth than the first communication scheme.

For example, the second communication scheme may be Ethernet communication, and the first communication scheme may be CAN communication. Accordingly, the first message may be a CAN message, and the second message may be an Ethernet message.

Meanwhile, the signal processing device 170 according to an embodiment of the present disclosure further includes: a first memory 320 having an IPC channel; and a second memory 330 storing sensor data including vehicle speed data.

For example, the first memory 320 may be a Static RAM (SRAM), and the second memory 330 may be a DDR memory. Particularly, the second memory 330 may be a Double data rate synchronous dynamic random access memory (DDR SDRAM).

Meanwhile, the signal processing device 170 according to an embodiment of the present disclosure includes a shared memory 508 which operates for transmitting the first message or the second message between the first processor 732a and the second processor 732b.

As described above, by performing inter-processor communication using the shared memory 508 during the communication between the first processor 732a and the second processor 732b, latency may be reduced and high-speed data transmission may be performed during inter-processor communication.

Meanwhile, it is desired that the shared memory 508 is provided in the first memory 320. Accordingly, latency may be reduced and high-speed data transmission may be performed during inter-processor communication.

Meanwhile, the first processor 732a may include a plurality of processor cores 317o, 317a, and 317b disposed therein.

Meanwhile, the first processor 732a may further include an interface 319 for receiving the CAN message from external vehicle sensors.

For example, a first processor core 317o included in the first processor 732a may execute a plurality of applications or may execute a first AUTomotive Open System Architecture (AUTOSAR) 312.

Particularly, by executing a second AUTOSAR 312, the first processor core 317o may execute an inter-processor communication (IPC) handler 314.

Meanwhile, the IPC handler 314 may exchange data with the first memory 320 or may exchange IPC data with an application running on the core 317o.

Meanwhile, the IPC handler 314 may exchange an interrupt signal with an IPC driver 348 included in the second processor 732b.

Meanwhile, a second processor core 317a included in the first processor 732a may execute IDS and may receive CAN data from the second memory 330.

Meanwhile, a third core 317b included in the first processor 732a may execute Logging, and may store the CAN data, received through the interface 319, in the second memory 330.

Meanwhile, the third processor core 317b included in the first processor 732a may execute an IPC module 318 to exchange IPC data with the first memory 320.

Meanwhile, the third processor core 317b included in the first processor 732a may transmit an interrupt signal to the IPC driver 348 in the second processor 732b.

The first memory 320 may exchange the IPC data with the IPC handler 314 or the IPC module 318.

Meanwhile, the second processor 732b may execute an application 343, the IPC handler 345, an IPC daemon 346, the IPC driver 348, and the like.

Meanwhile, the second processor 732b may further execute a service oriented architecture (SOA) adapter 341, a diagnosis server 342, and the second AUTOSAR 347.

The second AUTOSAR 347 may be an adaptive AUTOSAR, and the first AUTOSAR 312 may be a classic AUTOSAR.

The IPC daemon 346 may exchange an interrupt signal with the SOA adapter 341, the diagnosis server 342, the IPC handler 345, the IPC driver 348, and the like.

Meanwhile, the first memory 320 may exchange IPC data with the SOA adapter 341, the diagnosis server 342, the IPC handler 345, and the like.

Meanwhile, the IPC data described with reference to FIG. 3 may be the CAN message or Ethernet message.

Meanwhile, the IPC handler 345 may function as a service provider providing data such as diagnosis, firmware, upgrade, system information, etc., based on the second AUTOSAR 347.

Meanwhile, although not illustrated in FIG. 3, the first processor 732a implements a message router (not shown), and the message router may convert a frame of the first message, such as the CAN message, into a frame format of the second message, such as the Ethernet message, and may transmit the converted message to the second processor 732b.

Meanwhile, although not illustrated in FIG. 3, the first processor 732a may further implement a CAN driver (not shown) and a CAN interface (not shown).

For example, the CAN interface (not shown) may be implemented by a total of 16 channels, with eight channels of each of a fourth processor core (not shown) and a fifth processor core (not shown) in the first processor 732a.

In this case, a first CAN interface (not shown) implemented on the fourth processor core (not shown) may correspond to a first queue (PTb) during inter-processor communication, and a second CAN interface (not shown) implemented on the fifth processor core (not shown) may correspond to a second queue (PTb), having a higher priority than the first queue (PTb), during inter-processor communication.

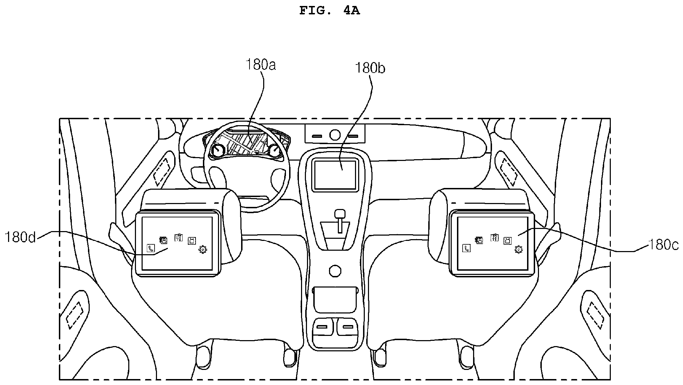

FIG. 4A is a diagram illustrating an example of an arrangement of a vehicle display apparatus in a vehicle according to an embodiment of the present disclosure.

Referring to the figure, a cluster display 180a, an audio video navigation (AVN) display 180b, rear seat entertainment displays 180c and 180d, and a rear-view mirror display (not shown) may be mounted in the vehicle.

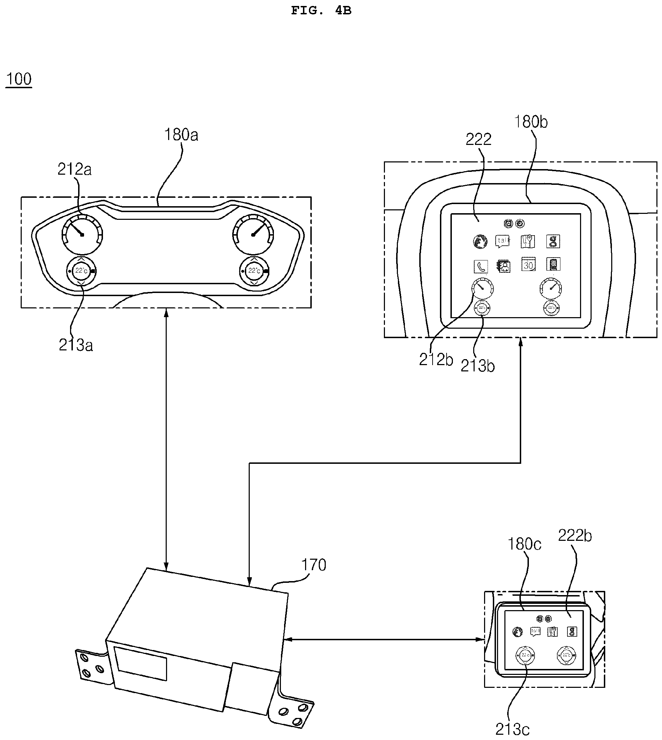

FIG. 4B is a diagram illustrating another example of an arrangement of a vehicle display apparatus in a vehicle according to an embodiment of the present disclosure.

The vehicle display apparatus 100 according to the embodiment of the present disclosure may include a plurality of displays 180a and 180b and a signal processing device 170 configured to perform signal processing in order to display images and information on the plurality of displays 180a and 180b.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The signal processing device 170 may have a processor 175 provided therein, and first to third virtual machines (not shown) may be executed by a hypervisor 505 in the processor 175.

The second virtual machine (not shown) may be operated for the first display 180a, and the third virtual machine (not shown) may be operated for the second display 180b.

Meanwhile, the first virtual machine (not shown) in the processor 175 may be configured to set a shared memory 508 based on the hypervisor 505 for transmission of the same data to the second virtual machine (not shown) and the third virtual machine (not shown). Consequently, the first display 180a and the second display 180b in the vehicle may display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle may divide and process data.

Meanwhile, the first virtual machine (not shown) in the processor 175 may receive and process wheel speed sensor data of the vehicle, and may transmit the processed wheel speed sensor data to at least one of the second virtual machine (not shown) or the third virtual machine (not shown). Consequently, at least one virtual machine may share the wheel speed sensor data of the vehicle.

Meanwhile, the vehicle display apparatus 100 according to the embodiment of the present disclosure may further include a rear seat entertainment (RSE) display 180c configured to display driving state information, simple navigation information, various kinds of entertainment information, or an image.

The signal processing device 170 may further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c may be operated based on a Linux Operating System (OS), and others may be operated based on a Web Operating System (OS).

The signal processing device 170 according to the embodiment of the present disclosure may be configured to display the same information or the same images in a synchronized state on the displays 180a to 180c to be operated under various operating systems.

Meanwhile, FIG. 4B illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a second home screen 222b including a plurality of applications and an in-vehicle temperature indicator 213c is displayed on the third display 180c.

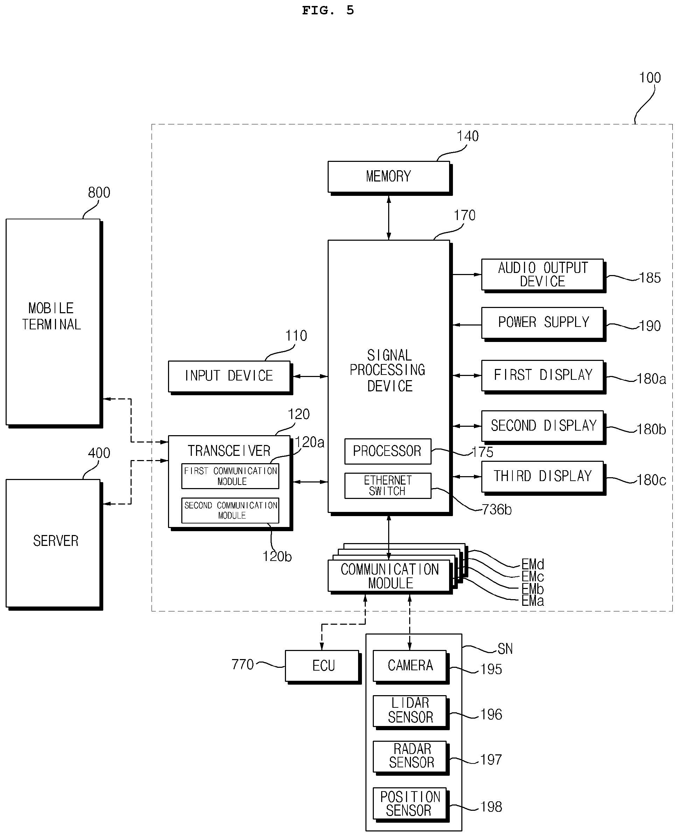

FIG. 5 is an internal block diagram illustrating the vehicle display apparatus of FIG. 4B according to the embodiment of the present disclosure.

Referring to the figure, the vehicle display apparatus 100 according to the embodiment of the present disclosure may include an input device 110, a transceiver 120 for communication with an external device, a plurality of communication modules EMa to EMd for internal communication, a memory 140, a signal processing device 170, a plurality of displays 180a to 180c, an audio output device 185, and a power supply 190.

The plurality of communication modules EMa to EMd may be disposed in a plurality of zones Z1 to Z4, respectively, in FIG. 2A.

Meanwhile, the signal processing device 170 may be provided therein with an Ethernet switch 736b for data communication with the respective communication modules EM1 to EM4.

The respective communication modules EM1 to EM4 may perform data communication with a plurality of sensor devices SN or an ECU 770.

Meanwhile, each of the plurality of sensor devices SN may include a camera 195, a lidar sensor 196, a radar sensor 197, or a position sensor 198.

The input device 110 may include a physical button or pad for button input or touch input.

Meanwhile, the input device 110 may include a microphone (not shown) for user voice input.

The transceiver 120 may wirelessly exchange data with a mobile terminal 800 or a server 400.

In particular, the transceiver 120 may wirelessly exchange data with a mobile terminal 800 of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server 400. To this end, the transceiver 120 may include a mobile communication module (not shown).

Meanwhile, the transceiver 120 may include a first communication module 120a configured to perform communication of a first communication standard based on an unlicensed frequency band, and a second communication module 120b configured to perform communication of a second communication standard based on a licensed frequency band.

For example, the unlicensed frequency band may range from 2.4 GHz to 2.4835 GHz, from 5.15 GHz to 5.825 GHz, and the like.

For example, the licensed frequency band may range from 850 MHz to 900 MHz, or may be 1800 MHz, 2100 MHz, 2600 MHz, 3% GHz, 28 GHz, and the like.

For example, the first communication module 120a may perform Wi-Fi communication, and the second communication module 120b may perform mobile communication such as 4G, 5G, and the like.

The plurality of communication modules EM1 to EM4 may receive sensor information from an electronic control unit (ECU) 770 or a sensor device SN, and may transmit the received information to the signal processing device 170.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, or in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor.

Meanwhile, the position module may include a GPS module configured to receive GPS information or a position sensor 198.

Meanwhile, at least one of the plurality of communication modules EM1 to EM4 may transmit position information data sensed by the GPS module or the position sensor 198 to the signal processing device 170.

Meanwhile, at least one of the plurality of communication modules EM1 to EM4 may receive front-of-vehicle image data, side-of-vehicle image data, rear-of-vehicle image data, and obstacle-around-vehicle distance information from the camera 195, the lidar sensor 196, or the radar sensor 197, and may transmit the received information to the signal processing device 170.

The memory 140 may store various data necessary for overall operation of the vehicle display apparatus 100, such as programs for processing or control of the signal processing device 170.

For example, the memory 140 may store data about the hypervisor and first to third virtual machines executed by the hypervisor in the processor 175.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control overall operation of each device in the vehicle display apparatus 100.

For example, the signal processing device 170 may include a processor 175 configured to perform signal processing for the vehicle displays 180a and 180b.

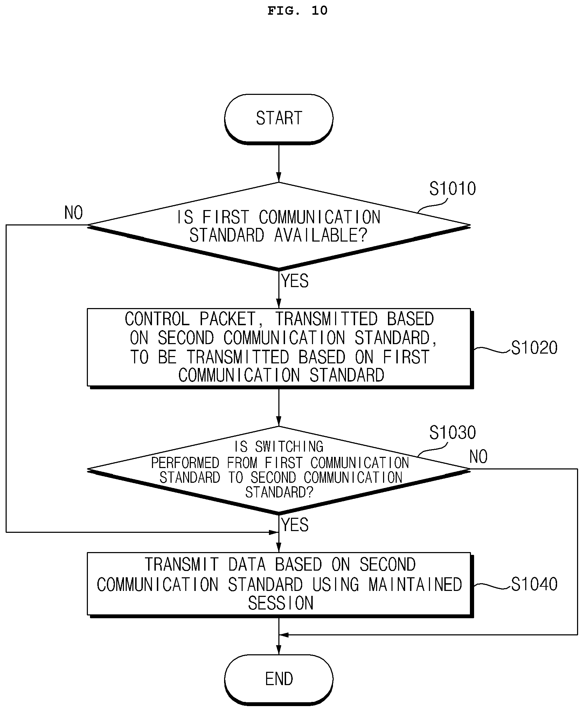

The processor 175 may execute the first to third virtual machines (not shown) on the hypervisor 505 (see FIG. 10) in the processor 175.

Among the first to third virtual machines (not shown) (see FIG. 10), the first virtual machine (not shown) may be called a server virtual machine, and the second and third virtual machines (not shown) and (not shown) may be called guest virtual machines.

For example, the first virtual machine (not shown) in the processor 175 may receive sensor data from the plurality of sensor devices, such as vehicle sensor data, position information data, camera image data, audio data, or touch input data, and may process and output the received sensor data.

As described above, the first virtual machine (not shown) may process most of the data, whereby 1:N data sharing may be achieved.

In another example, the first virtual machine (not shown) may directly receive and process CAN data, Ethernet data, audio data, radio data, USB data, and wireless communication data for the second and third virtual machines (not shown).

Further, the first virtual machine (not shown) may transmit the processed data to the second and third virtual machines 530 and 540.

Accordingly, only the first virtual machine (not shown), among the first to third virtual machines (not shown), may receive sensor data from the plurality of sensor devices, communication data, or external input data, and may perform signal processing, whereby load in signal processing by the other virtual machines may be reduced and 1:N data communication may be achieved, and therefore synchronization at the time of data sharing may be achieved.

Meanwhile, the first virtual machine (not shown) may be configured to write data in the shared memory 508, whereby the second virtual machine (not shown) and the third virtual machine (not shown) share the same data.

For example, the first virtual machine (not shown) may be configured to write vehicle sensor data, the position information data, the camera image data, or the touch input data in the shared memory 508, whereby the second virtual machine (not shown) and the third virtual machine (not shown) share the same data. Consequently, 1:N data sharing may be achieved.

Eventually, the first virtual machine (not shown) may process most of the data, whereby 1:N data sharing may be achieved.

Meanwhile, the first virtual machine (not shown) in the processor 175 may be configured to set the shared memory 508 based on the hypervisor 505 in order to transmit the same data to the second virtual machine (not shown) and the third virtual machine (not shown).

Meanwhile, the signal processing device 170 may process various signals, such as an audio signal, an image signal, and a data signal. To this end, the signal processing device 170 may be implemented in the form of a system on chip (SOC).

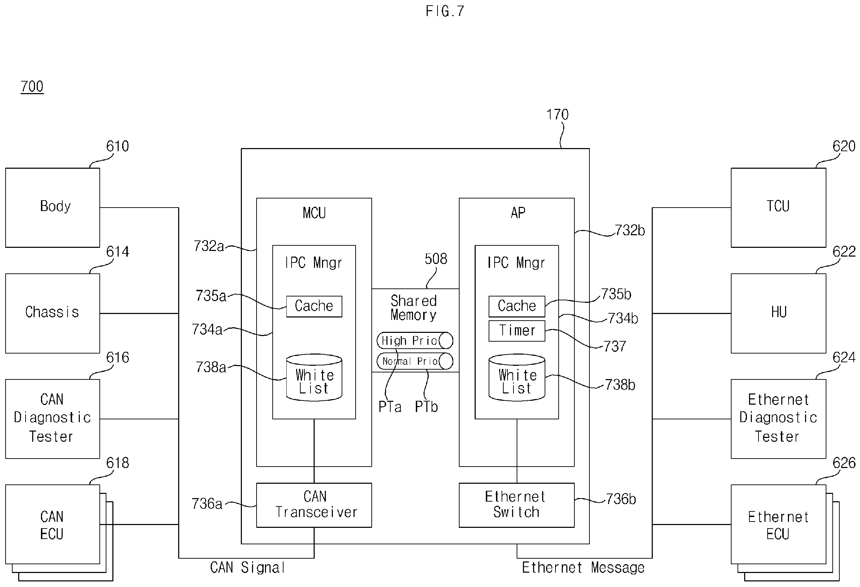

Meanwhile, the signal processing device 170 included in the display apparatus 100 of FIG. 5 may be the same as the signal processing device 170 of a vehicle communication device 700 of FIG. 7 and the like.

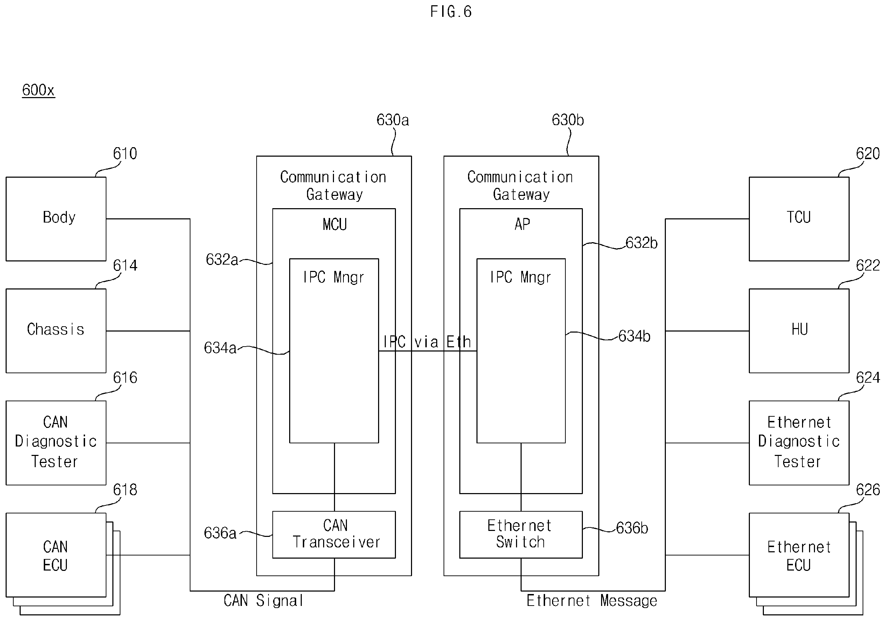

FIG. 6 is an internal block diagram illustrating an example of a vehicle communication device.

Referring to the drawing, a vehicle communication device 600x associated with the present disclosure may include a first communication gateway 630a and a second communication gateway 630b.

The first communication gateway 630a may include a body module 610, a chassis module 614, a CAN diagnostic tester 616, a CAN transceiver 636a for exchanging a CAN signal by CAN communication with at least one CAN ECU 618 and the like, and a first processor 632a for performing signal processing on the CAN signal received from the CAN transceiver 636a.

Meanwhile, the first processor 632a may include an IPC manager 634a for inter-processor communication with a second processor 632b in the second communication gateway 630b.

The second communication gateway 630b may include a telematics control module 620, a head module 622, an Ethernet diagnostic tester 624, an Ethernet switch 636b for exchanging an Ethernet message by Ethernet communication with at least one Ethernet ECU 626, and a second processor 632b for performing signal processing on the Ethernet message received from the Ethernet switch 636b.

Meanwhile, the second processor 632b may include an IPC manager 634b for inter-processor communication with the first processor 632a in the first communication gateway 630a.

Meanwhile, the IPC manager 634a in the first processor 632a and the IPC manager 643b in the second processor 632b may perform inter-processor communication based on the Ethernet communication.

While the inter-processor communication is suitable for high-speed transmission of large data using a high bandwidth based on Ethernet, the communication method has a drawback in that latency occurs in communication between a protocol stack and a Physical Layer (PHY).

Accordingly, the present disclosure provides a method of reducing latency and performing high-speed data transmission during inter-processor communication, which will be described below with reference to FIG. 7 and the following figures.

FIG. 7 is an internal block diagram illustrating another example of a vehicle communication device.

Referring to the drawing, the vehicle communication device 700 according to an embodiment may include: a first processor 732a, which based on a first communication scheme along with a first communication gateway 730a and a second communication gateway 730b, is configured to receive a first message including a sensor signal in a vehicle and to perform signal processing on the received first message; a second processor 732b, which based a second communication scheme, is configured to receive a second message including a communication message received from an external source and to perform signal processing of the received second message; and a shared memory 508 configured to operate to transmit the first message or the second message between the first processor 732a and the second processor 732b.

In comparison with the communication device 600x of FIG. 6, by using the shared memory 508 for inter-processor communication (IPC) between the first processor 732a and the second processor 732b, it is possible to reduce latency and to perform high-speed data transmission during the inter-processor communication.

In addition, in comparison with the communication device 600x of FIG. 6, by providing the first processor 732a, the second processor 732b, and the shared memory 508 in one signal processing device 170 implemented as a single chip, it is possible to reduce latency and to perform high-speed data transmission during the inter-processor communication.

Meanwhile, it is preferred that the second communication scheme has a faster communication speed or a wider bandwidth than the first communication scheme.

For example, the second communication scheme may be Ethernet communication, and the first communication scheme may be CAN communication. Accordingly, the first message may be a CAN message, and the second message may be an Ethernet message.

Meanwhile, the signal processing device 170 and the vehicle communication device 700 including the same according to an embodiment of the present disclosure may further include: a transceiver 736a, which based on the first communication scheme, is configured to receive a first message including a sensor signal in a vehicle and to transmit the first message to the first processor 732a; and the switch 736b, which based on the second communication scheme, is configured to receive a second message including a communication message received from an external source, and to transmit the second message to the second processor 732b, such that the first and second messages may be transmitted stably to the first processor 732a and the second processor 732b.

The first processor 732a or the transceiver 736a may exchange a CAN signal by CAN communication with the body module 610, the chassis module 614, the CAN diagnostic tester 616, at least one CAN ECU 618, and the like.

Meanwhile, the first processor 732a may include a first manager 734a for inter-processor communication (IPC) with the second processor 732b. The first manager 734a may be referred to as an IPC manager.

Meanwhile, the first manager 734a may include a first cache 735a.

Meanwhile, the second processor 732b or the switch 736b may exchange an Ethernet message by Ethernet communication with the telematics control module 620, the head module 622, the Ethernet diagnostic tester 624, at least one Ethernet ECU 626, and the like. The switch 736b may be referred to as an Ethernet switch.

Meanwhile, the second processor 732b may include a second manager 734b for inter-processor communication (IPC) with the first processor 732a. The second manager 734a may be referred to as an IPC manager.

Meanwhile, the second manager 734b may include the second manager 734b including a second cache 735b and a timer 737.

Meanwhile, the second processor 723b may receive a request for periodic subscription to the first message from the Ethernet processor or the Ethernet ECU 626.

Accordingly, the second processor 732b may send the request for periodic subscription to the first message to the first processor 732a.

Particularly, the second processor 732b may transmit the subscription request through the inter-processor communication (IPC). Accordingly, the inter-processor communication may be performed.

Meanwhile, the first processor 732a may periodically receive CAN data from the at least one CAN ECU 618 and the like.

For example, the first processor 732a periodically receives the first message, predefined in a CAN database (DB), from the at least one CAN ECU 618 and the like.

For example, the periodic first message, which is sensor information, may include vehicle speed information, position information, or the like.

In another example, the periodic first message may include at least one of vehicle direction information, vehicle position information (GPS information), vehicle angle information, vehicle acceleration information, vehicle tilt information, forward/backward movement information, battery information, fuel information, tire information, vehicle lamp information, in-vehicle temperature information, or in-vehicle humidity information.

Meanwhile, the first processor 732a may select a first message, for which the subscription is requested, among the periodically received CAN data or first messages, and may transmit the first message, for which the subscription is requested, to the second processor 732b.

Meanwhile, the first processor 732a may separately process a first message, for which the subscription is not requested, among the periodically received CAN data or first messages, without transmitting the message to the second processor 732b.

Specifically, upon receiving the first message for which the subscription is requested, the first processor 732a may store the first message in the first cache 735a or may manage the first message. Upon receiving the first message, the first processor 732a may compare the first message with a value stored in the first cache 735a, and in the case in which a difference therebetween is greater than or equal to a predetermined value, the first processor 732a may transmit the first message to the second processor 732b through the inter-processor communication.

Meanwhile, upon receiving the first message for which the subscription is requested, the first processor 732a may store the first message in the first cache 735a or may manage the first message. Upon receiving the first message, the first processor 732a may compare the first message with a value stored in the first cache 735a, and in the case in which a difference therebetween is greater than or equal to a predetermined value, the first processor 732a may transmit the first message to the second processor 732b through the inter-processor communication using the shared memory 508.

For example, upon receiving the first message, the first processor 732a may compare the message with a value stored in the first cache 735a, and in the case in which the two are not the same, the first processor 732a may transmit the first message to the second processor 732b through the inter-processor communication using the shared memory 508.

In another example, upon receiving the first message, the first processor 732a may compare the message with the value stored in the first cache 735a, and in the case in which the two are the same, the first processor 732a may not transmit the first message to the second processor 732b.

Accordingly, by minimizing cache occupancy or buffer occupancy of the same data, it is possible to reduce latency and to perform high-speed data transmission during inter-processor communication.

Meanwhile, upon first receiving the first message, the second processor 732b may store the first message in the second cache 735b, and upon subsequently receiving the first message, the second processor 732b may update the second cache 735b. Accordingly, it is possible to reduce latency and to perform high-speed data transmission during inter-processor communication.

Meanwhile, upon receiving the first message, the second processor 732b may generate a thread of the timer 737, and each time the thread terminates, the second processor 732b may send a value in the second cache 735b to the Ethernet processor or the Ethernet ECU 626. Accordingly, it is possible to reduce latency and to perform high-speed data transmission during inter-processor communication.

Meanwhile, during a period in which the inter-processor communication is not performed such that the first message is not received, the second processor 732b may send a value in the second cache 735b to the Ethernet processor or the Ethernet ECU 626.

That is, in the case in which a value of the subscribed first message is constant during the period, the cache value stored in the second processor 732b may be sent to the Ethernet processor 626 without the inter-processor communication.

Accordingly, it is possible to minimize the usage of the IPC buffer in the shared memory 508 which operates in FIFO mode. In addition, by maintaining the usage of the IPC buffer to a minimum, data including the first message, the second message, or the like may be transmitted rapidly through the inter-processor communication.

Meanwhile, during a period in which the inter-processor communication is performed such that the first message is received, the second processor 732b may send a value in the updated second cache 735b to the Ethernet processor or the Ethernet ECU 626. Accordingly, it is possible to reduce latency and to perform high-speed data transmission during inter-processor communication.

Meanwhile, during the inter-processor communication, the shared memory 508 may transmit data between the first processor 732a and the second processor 732b through a first queue PTb and a second queue PTa having a higher priority than the first queue PTb.

Particularly, even when the number of events for the inter-processor communication increases, the shared memory 508 may transmit only the data, corresponding to events allocated for the second queue PTa, through the second queue PTa. Accordingly, real-time transmission of a high priority event may be ensured during the inter-processor communication.

For example, the first PTb may be a normal priority queue, and the second queue PTa may be a high priority queue.

Specifically, the shared memory 508 may transmit most of the data through the first queue PTb during the inter-processor communication.

However, the share memory 508 may transmit only time sensitive-critical data without delay through the second queue PTa which is a higher priority queue than the first queue PTb.

For example, the time sensitive-critical data may be speed data, position information data, or the like.

That is, the shared memory 508 may transmit the speed data or position information data between the first processor 732a or the second processor 732b through the second queue PTa. Accordingly, real-time transmission of the speed data or the position information data having a high priority may be ensured during the inter-processor communication.

Meanwhile, the first processor 732a or the second processor 732b may manage a list of applications capable of using the second queue PTa.

For example, the second processor 732b may include an application for displaying speed information, as an application capable of using the second queue PTa, in a second list 738b and may manage the list.

Meanwhile, for real-time transmission through the second queue PTa, a minimum operation is preferred so that there may be no redundant scenarios or applications.

As described above, by transmitting the time sensitive-critical data in real time using the second queue PTa, real-time transmission of a high priority event may be ensured during the inter-processor communication.

Meanwhile, during the inter-processor communication, the shared memory 508 may reduce latency and may perform high-speed data transmission by assigning at least two queues.

In the drawing, an example is illustrated in which the fist manager 734a in the first processor 732a manages a first list 738a which is a whitelist, and the second manager 734b in the second processor 732b manages a second list 738b which is a whitelist, thereby ensuring the real-time transmission of a high-priority event during the inter-processor communication.

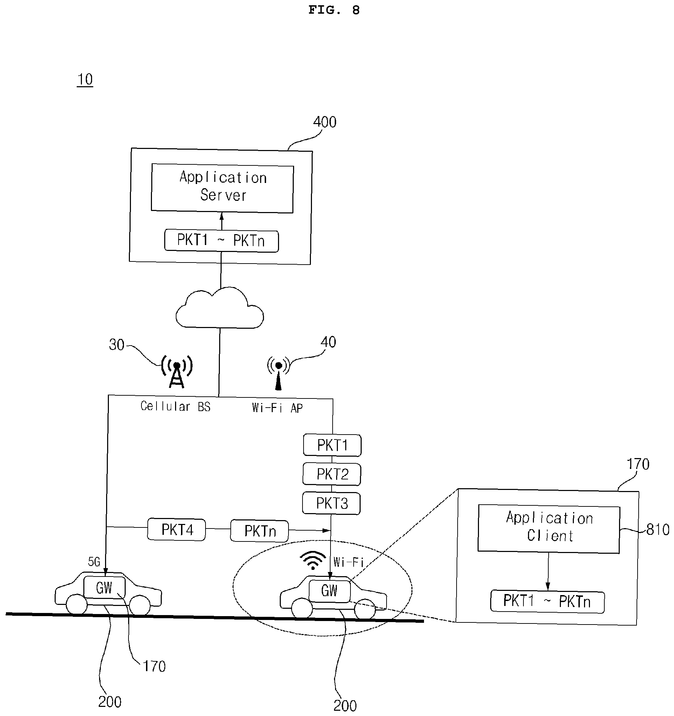

FIG. 8 is a diagram illustrating an example of a vehicle communication system according to an embodiment of the present disclosure.

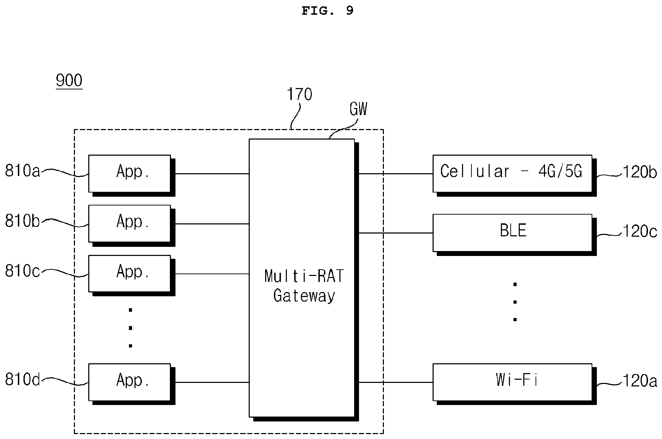

Referring to the drawing, a vehicle communication system 10 according to an embodiment of the present disclosure may include a vehicle communication device 900 (see FIG. 9) including a signal processing device 700 in a vehicle 200, and a server 400.

The vehicle communication device 900 (see FIG. 9) according to an embodiment of the present disclosure may include a first communication module 120a configured to perform communication of a first communication standard based on an unlicensed frequency band, a second communication module 120b configured to perform communication of a second communication standard based on a licensed frequency band, and a signal processing device 170.

The first communication module 120a may perform Wi-Fi communication, and the second communication module 120b may perform cellular-based mobile communication.

When an application client 810 in the signal processing device 170 is executed, vehicle-related data may be transmitted in packet form to the server 400 or the mobile terminal 800 via Wi-Fi communication or cellular-based mobile communication.

For example, in the case in which the vehicle communication device 900 (see FIG. 9) performs Wi-Fi communication based on the first communication module 120a, packets PKT1 to PKTn may be transmitted to the server 400 or the mobile terminal 800 via an AP device 40.

In another example, in the case in which the vehicle communication device 900 (see FIG. 9) performs mobile communication based on the second communication module 120b, packets PKT1 to PKTn may be transmitted to the server 400 or the mobile terminal 800 via a cellular base station 30.

FIG. 9 is an exemplary internal block diagram illustrating a vehicle communication device according to an embodiment of the present disclosure.

Referring to the drawing, a vehicle communication device 900 according to an embodiment of the present disclosure includes a first communication module 120a configured to perform communication of a first communication standard based on an unlicensed frequency band, a second communication module 120b configured to perform communication of a second communication standard based on a licensed frequency band, and a signal processing device 170.

The first communication module 120a may perform Wi-Fi communication, and the second communication module 120b may perform cellular-based mobile communication.

Meanwhile, the vehicle communication device 900 according to an embodiment of the present disclosure may further include a third communication module 120c configured to perform communication in an unlicensed frequency band based on a third communication standard.

The third communication module 120c may perform Bluetooth communication.

Meanwhile, the signal processing device 170 may include a gateway GW configured to execute a plurality of applications 810a to 810d and to transmit data related to the plurality of applications to the server 400 or the mobile terminal 800 by using the first communication module 120a or the second communication module 120b.

The gateway GW may be a Multi Connectivity Interface Gateway.

The gateway GW in the signal processing device 170 according to an embodiment of the present disclosure includes a handover selector 1210 configured to determine switching to the first communication module 120a based on a strength of a communication signal of the first communication standard. Accordingly, external transfer of vehicle data may be efficiently performed. In addition, cost for external transfer of vehicle data may be minimized.

The gateway GW in the signal processing device 170 according to an embodiment of the present disclosure may determine switching to the first communication module 120a based further on at least one of a strength of a communication signal of the second communication standard, a remaining amount of the vehicle data, or a validity period of the vehicle data. Accordingly, external transfer of vehicle data may be efficiently performed. In addition, cost for external transfer of vehicle data may be minimized.

While transmitting the vehicle data using the first communication module 120a after switching to the first communication module 120a, in the case in which a validity period of the vehicle data to be transmitted is not met, the gateway GW in the signal processing device 170 according to an embodiment of the present disclosure may determine switching again from the first communication module 120a to the second communication module 120b. Accordingly, external transfer of vehicle data may be efficiently performed.

The gateway GW in the signal processing device 170 according to an embodiment of the present disclosure may select the first communication module 120a or the second communication module 120b based on the validity period of the vehicle data to be transmitted. Accordingly, external transfer of vehicle data may be efficiently performed.

The gateway GW in the signal processing device 170 according to an embodiment of the present disclosure includes a handover selector 1210 which, while transmitting the vehicle data to the server 400 or the mobile terminal 800 through the first communication module 120a, is configured to determine switching to the second communication module 120b based on the validity period of the vehicle data. Accordingly, external transfer of vehicle data may be efficiently performed.

In the case in which a validity period of the vehicle data is not met while transmitting the vehicle data using the first communication module 120a, the gateway GW in the signal processing device 170 according to an embodiment of the present disclosure may determine switching from the first communication module 120a to the second communication module 120b. Accordingly, external transfer of vehicle data may be efficiently performed.

FIG. 10 is a flowchart illustrating a method of operating a vehicle communication device according to an embodiment of the present disclosure.

Referring to the drawing, the signal processing device 170 according to an embodiment of the present disclosure determines whether the first communication standard is available (S1010), and in the case in which so, the signal processing device 170 may control a packet, transmitted based on the second communication standard, to be transmitted based on the first communication standard (S1020).

Meanwhile, in the case in which the first communication standard is not available in operation 1010, operation 1040 (S1040) is performed.

For example, upon determining that communication based on the first communication standard is available based on a strength of a communication signal of the first communication standard, the signal processing device 170 according to an embodiment of the present disclosure may determine switching to the first communication module 120a so that the packet, transmitted based on the second communication standard, may be transmitted based on the first communication standard.

Specifically, in the case in which the strength of the communication signal of the first communication standard is greater than or equal to a reference value, the signal processing device 170 according to an embodiment of the present disclosure may determine that the communication based on the first communication standard is available, and may determine switching to the first communication module 120a so that the packet, transmitted based on the second communication standard, may be transmitted based on the first communication standard.

Accordingly, external transfer of vehicle data may be efficiently performed. In addition, cost for external transfer of vehicle data may be minimized.

Then, the signal processing device 170 according to an embodiment of the present disclosure determines whether switching from the first communication standard to the second communication standard is required (S1030), and in the case in which so, the signal processing device 170 may control the packet to be transmitted based on the second communication standard by using a maintained session (S1040).

For example, in the case in which the strength of the communication signal of the first communication standard is less than the reference value, the signal processing device 170 according to an embodiment of the present disclosure determines that the first communication standard is not available, and may control the packet to be transmitted based on the second communication standard by using the maintained session.

As described above, while maintaining the session based on the second communication standard, the packet may be transmitted immediately upon determining switching to the second communication standard, thereby ensuring rapid packet transmission.

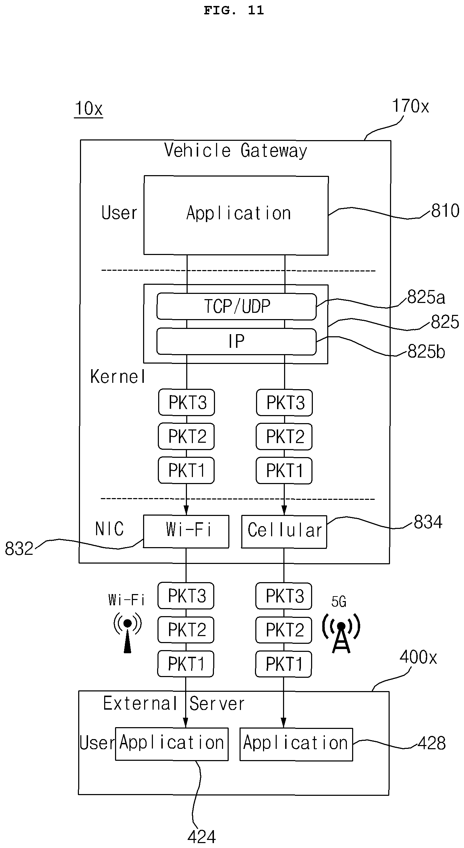

FIGS. 11 to 14C are diagrams referred to in the description of FIG. 10.

FIG. 11 is a diagram illustrating an example of a vehicle communication system associated with the present disclosure.

Referring to the drawing, the vehicle communication system 10x associated with the present disclosure may include a signal processing device 170x in a vehicle 200 and an external server 400x.

The signal processing device 170x executes a Wi-Fi interface 832 and a cellular interface 834, and executes an interface 825, which includes a TCP/UDP interface 825a and an IP interface 825b, in Kernel mode, and executes an application 810 in user mode.

When Wi-Fi is available, the signal processing device 170x may transmit a packet to an application 424 in the external server 400x by using the Wi-Fi interface 832, and when cellular is available, the signal processing device 170x may transmit the packet to the application 424 in the external server 400x by using the cellular interface 834.

Referring to FIG. 11, only Wi-Fi is used when Wi-Fi is available, and after WiFi is turned off, cellular is used.

Further, referring to FIG. 11, only cellular is used when cellular is available, and after cellular is turned off, Wi-Fi is used.

That is, there is a drawback in that packets are transmitted separately in each of the cases where Wi-Fi is available and cellular is available, thereby making it difficult to provide seamless packet transmission, and latency occurs while transmitting the vehicle data to the external server 400x, thereby resulting in a considerable cost for using cellular.

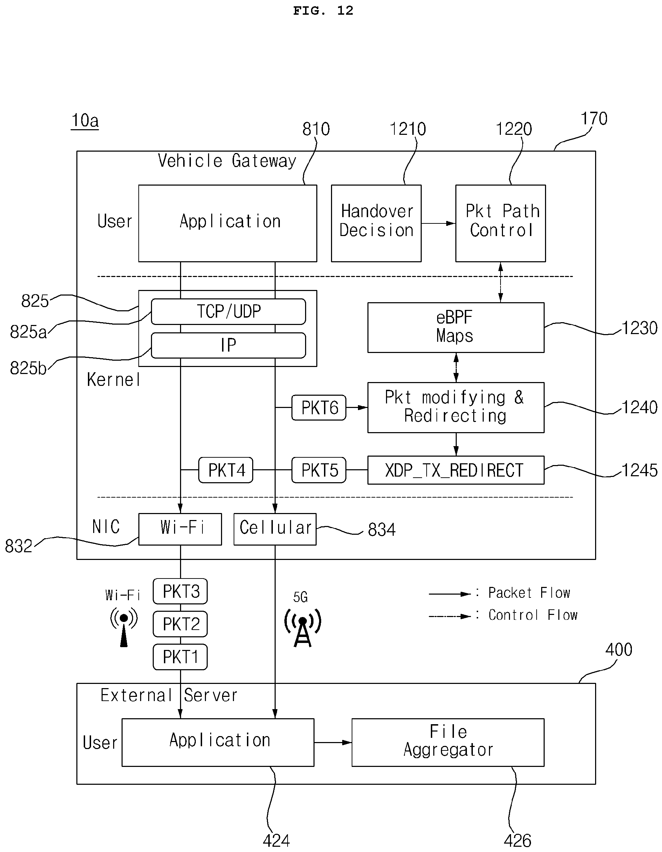

Accordingly, the present disclosure proposes a scheme for enabling switching between Wi-Fi and cellular, which will be described below with reference to FIG. 12 and subsequent figures.

FIG. 12 is a diagram illustrating a vehicle communication system according to an embodiment of the present disclosure.

Referring to the drawing, the vehicle communication system 10 according to an embodiment of the present disclosure includes the signal processing device 170 in the vehicle 200 and an external server 400.

The signal processing device 170 according to an embodiment of the present disclosure includes: a first interface 832 configured to exchange data with a first communication module 120a that performs communication of a first communication standard based on an unlicensed frequency band; a second interface 834 configured to exchange data with a second communication module 120b that performs communication in a licensed frequency band based on a second communication standard; and a handover selector 1210 which, while transmitting vehicle data to the server 400 or the mobile terminal 800 through the second communication module 120b, is configured to determine switching to the first communication module 120a based on a strength of a communication signal of the first communication standard.

Meanwhile, the vehicle data may include sensor data.

For example, the sensor data may include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, in-vehicle temperature data, or in-vehicle humidity data.

The first interface 832 may be a Wi-Fi interface, and the second interface 834 may be a cellular interface.

Meanwhile, the signal processing device 170 according to an embodiment of the present disclosure may further include a packet path controller 1220 configured to transmit the packet, transmitted based on the second communication standard, based on the first communication standard through the first interface 832.

Meanwhile, the signal processing device 170 according to an embodiment of the present disclosure may further include a packet converter 1240 configured to convert a header of the packet, transmitted based on the second communication standard, into interface data based on the first communication standard.

The signal processing device 170 according to an embodiment of the present disclosure executes or includes the first interface 832 and the second interface 834 as a network interface card NIC.

Meanwhile, the signal processing device 170 according to an embodiment of the present disclosure executes a kernel, executes an interface 825, which includes a TCP/UDP interface 825a and an IP interface 825b, in Kernel mode, and executes an application 810 in user mode.

Meanwhile, the signal processing device 170 according to an embodiment of the present disclosure executes the handover selector 1210 and the packet path controller 1220 in user mode.

Meanwhile, the signal processing device 170 according to an embodiment of the present disclosure executes a data processor (eBPF Maps) 1230, a packet converter (pkt modifying & redirecting) 1240, and a redirect unit (XDP_TX_REDRIECT) 1245 in Kernel mode.

The server 400 may include an application 424 for receiving a packet based on the first communication standard or the second communication standard, and a file aggregator 426.

Meanwhile, while transmitting the vehicle data to the server 400 or the mobile terminal 800 through the second communication module 120b, the handover selector 1210 according to an embodiment of the present disclosure determines switching to the first communication module 120a. Accordingly, external transfer of vehicle data may be efficiently performed. In addition, cost for external transfer of vehicle data may be minimized.

Meanwhile, in the case in which communication based on the first communication standard is available based on the strength of the communication signal of the first communication standard, the handover selector 1210 may determine switching to the first communication module 120a so that the packet, transmitted based on the second communication standard, may be transmitted based on the first communication standard.

For example, in the case in which the strength of the communication signal of the first communication standard is greater than or equal to a reference value, the handover selector 1210 may determine that the communication based on the first communication standard is available, and may determine switching to the first communication module 120a so that the packet, transmitted based on the second communication standard, may be transmitted based on the first communication standard.

Meanwhile, in the case in which the first communication module 120a is activated in response to switching to the first communication module 120a by the handover selector 1210, an application 810 for transmitting the vehicle data may be configured to connect the server 400 or the mobile terminal 800 to a session. Accordingly, external transfer of vehicle data may be efficiently performed.

Meanwhile, when switching from the second communication module 120b to the first communication module 120a, the handover selector 1210 may maintain a session of the second communication standard. Accordingly, it is possible to minimize a transmission delay that occurs when a communication scheme changes during external transfer of vehicle data.

Meanwhile, after switching from the second communication module 120b to the first communication module 120a, the handover selector 1210 may determine switching back from the first communication module 120a to the second communication module 120b based on the strength of the communication signal of the second communication standard or the strength of the communication signal of the first communication standard.

For example, after switching from the second communication module 120b to the first communication module 120a, in the case in which the strength of the communication signal of the first communication standard is less than a predetermined value, the handover selector 1210 may determine that communication based on the first communication standard is not available and may determine switching back from the first communication module 120a to the second communication module 120b.

Meanwhile, the signal processing device 170 according to an embodiment of the present disclosure may further include a packet path controller 1220 configured to control a packet to be transmitted using the maintained session of the second communication standard, in response to switching back from the first communication module 120a to the second communication module 120b. Accordingly, it is possible to minimize a transmission delay that occurs when a communication scheme changes during external transfer of vehicle data.

Meanwhile, the handover selector 1210 may determine switching to the first communication module 120a based further on at least one of the strength of the communication signal of the second communication standard, a remaining amount of the vehicle data or a validity period of the vehicle data. Accordingly, external transfer of vehicle data may be efficiently performed. In addition, cost for external transfer of vehicle data may be minimized.

Meanwhile, when selecting vehicle data to be transmitted, the handover selector 1210 may select the data to be transmitted within a maximum size that can be transmitted in a timeslot. Accordingly, external transfer of vehicle data may be efficiently performed.

Meanwhile, when transmitting the vehicle data using the first communication module 120a after switching to the first communication module 120a, in the case in which the validity period of the vehicle data to be transmitted is not met, the handover selector 1210 may determine switching again from the first communication module 120a to the second communication module 120b. Accordingly, external transfer of vehicle data may be efficiently performed.

Meanwhile, the handover selector 1210 may select the first communication module 120a or the second communication module 120b based on the validity period of the vehicle data to be transmitted. Accordingly, external transfer of vehicle data may be efficiently performed.

Meanwhile, the packet path controller 1220 may control an amount of data, which is proportional to the strength of the communication signal of the first communication standard, to be transmitted in a timeslot. Accordingly, external transfer of vehicle data may be efficiently performed. In addition, cost for external transfer of vehicle data may be minimized.

The signal processing device 170 according to another embodiment of the present disclosure includes the handover selector 1210 which, while transmitting the vehicle data to the server 400 or the mobile terminal 800 through the first communication module 120a, is configured to determine switching to the second communication module 120b based on a validity period of the vehicle data. Accordingly, external transfer of vehicle data may be efficiently performed.

Meanwhile, in the case in which the validity period of the vehicle data is not met when transmitting the vehicle data using the first communication module 120a, the handover selector 1210 may determine switching from the first communication module 120a to the second communication module 120b.

In response thereto, the packet path controller 1220 may control a packet, transmitted based on the first communication standard, to be transmitted based on the second communication standard through the second interface 834.

In addition, the packet converter 1240 may convert interface data, transmitted based on the first communication standard, into a header of a packet based on the second communication standard. Accordingly, external transfer of vehicle data may be efficiently performed.

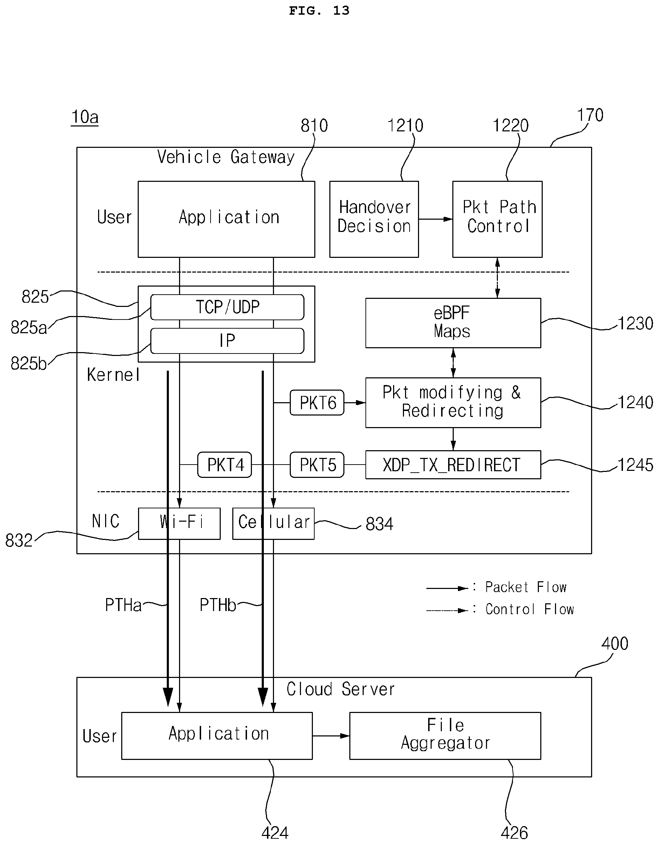

FIG. 13 is a diagram referred to in the description of FIG. 12.

Referring to the drawing, packet data is transmitted to the application 424 in the external server 400 through the second interface 834 and the second communication module 120b by communication in a licensed frequency band based on the second communication standard, and in the case in which communication based on the first communication standard is available during communication based on the second communication standard, the packet data is transmitted to the application 424 in the external server 400 through the first interface 832 and the first communication module 120a in response to switching to the first communication module 120a.

The file aggregator 426 generates a file by combining packets received based on the second communication standard and packets received based on the first communication standard.

Meanwhile, during communication based on the second communication standard, in response to switching from communication based on the second communication standard to communication based on the first communication standard, the signal processing device 170 according to an embodiment of the present disclosure redirects a packet path from the cellular network to the Wi-Fi network so that a packet transmitted through the cellular network may be transmitted through the Wi-Fi network. This method ensures efficient use of Wi-Fi and minimizes data cost.

Meanwhile, a cellular session is maintained during data transmission using Wi-Fi.

Meanwhile, while packet data is transmitted to the application 424 in the external server 400 through the first interface 832 and the first communication module 120a by communication in an unlicensed frequency band based on the first communication standard, in the case in which communication based on the first communication standard is not available, the packet data is transmitted to the application 424 in the external server 400 through the second interface 834 and the second communication module 120b in response to switching to the second communication module 120b.

In this case, the cellular session is maintained, such that the cellular session may be used when switching to the second communication module 120b, thereby enabling rapid switching to the cellular session.

Meanwhile, the file aggregator 426 in the server 400 generates a file by combining packets received based on the first communication standard and packets received based on the second communication standard.

Meanwhile, when transmitting the vehicle data to the server 400 or the mobile terminal 800, the handover selector 1210 may select, based on the following Equation 1, any one of the first communication module 120a configured to perform communication in the unlicensed frequency band based on the first communication standard and the second communication module 120b configured to perform communication in the licensed frequency band based on the second communication standard, or may determine switching therebetween.

$$[\text{Equation 1}]$$

$$\min : C(t)$$

$$(C1): C(t) = q \cdot \left( \sum_{i}^{N} x_i(t) \cdot s_i(t) \right) \cdot y(t)$$

$$(C2): x_i(t), y(t) \in \{0,1\}$$

$$(C3): s_i(t) = \begin{cases} d_w, & y(t) = 0 \text{ and } s_i(t) \geq d_w \\ d_c, & y(t) = 1 \text{ and } s_i(t) \geq d_c \\ s_i - s_i(t-1), & otherwise \end{cases}$$

$$(C4): h(t) = \begin{cases} 1, & y(t) + (1 - y(t-1)) \in \{0,2\} \\ 0, & y(t) + (1 - y(t-1)) = 1 \end{cases}$$

$$(C5): h(t) \cdot \left( y(t) \cdot l_{w \to c} + (1 - y(t)) \cdot l_{c \to w} \right) \leq D$$

$$(C6): a_i(t) = t - t_{generated}$$

$$(C7): a_i(t) \leq L_i$$

where C(t) denotes cost incurred at time step t, q denotes cost per transmitted data, xi(t) denotes a variable for determining data transmission, si(t) denotes a remaining amount of data or a data size, y(t) denotes a network determination variable, dw denotes a maximum amount of data transmission based on a WiFi signal strength, dc denotes a maximum amount of data transmission based on a cellular signal strength, h(t) denotes information as to whether network switching occurs, lw->c denotes a delay caused by switching from WiFi to cellular, lc->w denotes a delay caused by switching from cellular to WiFi, D denotes an allowable time for network switching, ai(t) denotes cumulative time (age0 after generating the data, and Li denotes a validity period of data.

Meanwhile, the handover selector 1210 may determine data to be transmitted at the current time and a network to be used (the first communication module 120a or the second communication module 120b), based on information observed at the current time step.

The cost for using the cellular network (or the second communication module 120b) in C1 of Equation 1 is affected by xi(t) for determining transmission of i-th data, and y(t) for determining use of the network (the first communication module 120a or the second communication module 120b).

Cost is incurred only when xi(t) is 1 indicating that data is transmitted, and when y(t) is 1 indicating that a cellular network (or the second communication module 120b) is used.

In C2 of Equation 1, xi(t) and y(t) for determining data transmission and network use have a value of 0 or 1.

In C3 of Equation 1, an amount of data proportional to maximum intensities dw and dc of cellular/WiFi signals may be transmitted in timeslot 1.

In C4 and C5 of Equation 1, when the previous time step and network are switched, switching is required to be completed within a predetermined allowable time.

In C6 and C7 of Equation 1, it is required to determine transmission of vehicle data, which is transmitted from the vehicle communication device 900 to the server 400 or the mobile terminal 800, before a validity period of the data expires.

Meanwhile, C1 of Equation 1 may be non-convex based on the second-order Hessian, and thus is preferably transformed into a convex form. To this end, the following Equation 2 is used.

[Equation 2]

$$(C1): C(t) = q \cdot \left( \sum_i^N x_i(t) \cdot s_i(t) \right) \cdot y(t)$$

Assuming that N=1, Equation 2 is transformed into $C(t)=q*x(t)*s(t)*y(t)$, and by treating as constants variables except variables $x_i(t)$ and $y(t)$, and removing the variables treated as constants, Equation 2 is simplified to $C(t) = x(t)*y(t)$.

In this case, second-order Hessian matrix of $C(t)$ may be represented by the following Equation 3.

[Equation 3]

$$\begin{bmatrix} 0 & -1 \\ -1 & 0 \end{bmatrix}$$

Meanwhile, the eigenvalues of the second-order Hessian matrix are +1 or -1, and the two values are all non-negative, such that an optimization function in Equation 2 is proved to be non-convex.

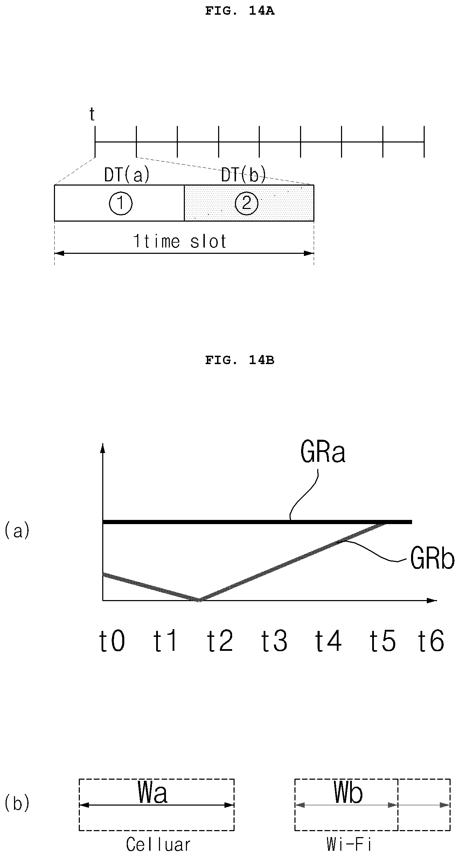

Meanwhile, as illustrated in FIG. 14A, the handover selector 1210 may determine the variable $y(t)$ by dividing timeslot 1 into two sections, and then may determine the variable $x_i(t)$.

The handover selector 1210 may determine to basically use the first communication module 120a such as Wi-Fi, and only when a validity period of at least some of the vehicle data is not met by using the first communication module 120a such as Wi-Fi, the handover selector 1210 may determine to use the second communication module 120b such as cellular.

That is, the handover selector 1210 may determine the first communication module 120a or the second communication module 120b based on the following Equation 4.

[Equation 4]

$$d_w \leq \min(s_i(t)), \quad y(t) = 1$$

Meanwhile, in the case in which $y(t)$ in Equation 1 or Equation 2 is 1, the handover selector 1210 may calculate the following Equation 5.

[Equation 5]

$$\min: C(t)$$

$$(C1): C(t) = q \cdot \left( \sum_{i}^{N} x_i(t) \cdot s_i(t) \right)$$

$$(C2): x_i(t) \in \{0,1\}$$

$$(C3): s_i(t) = \begin{cases} d_c, & s_i(t) \geq d_c \\ s_i - s_i(t-1), & otherwise \end{cases}$$

$$(C4): a_i(t) = t - t_{generated}$$

$$(C5): a_i(t) \leq L_i \cdot x_i(t)$$

In the case in which the second communication module 120b, such as cellular, is used in conditional expression C1 of Equation 5, the cost incurred for using the second communication module 120b is affected by xi(t) for determining transmission of i-th data. The cost is determined by a total size of the data that is determined to be transmitted.

Meanwhile, xi(t) for determining data transmission may have a value of 0 or 1 in conditional expression C2 of Equation 5.

Meanwhile, an amount of data proportional to a strength of a communication signal of the second communication standard, such as cellular, may be transmitted during timeslot 1 in conditional expression C3 of Equation 5.

Meanwhile, in conditional expressions C4 and C5 of Equation 5, it is required to determine transmission of data, which is transmitted to the server 400 or the mobile terminal 800, before a validity period of the data expires.

Meanwhile, in the case in which y(t) in Equation 1 or Equation 2 is 0, the handover selector 1210 may calculate the following Equation 6.

[Equation 6]

$$\max: S(t)$$

$$(C1): S(t) = \sum_{i}^{N} x_i(t) \cdot s_i(t)$$

$$(C2): x_i(t) \in \{0,1\}$$

$$(C3): s_i(t) = \begin{cases} d_w, & s_i(t) \geq d_w \\ s_i - s_i(t-1), & otherwise \end{cases}$$

$$(C4): a_i(t) = t - t_{generated}$$

$$(C5): a_i(t) \leq L_i \cdot x_i(t)$$

In conditional expression C1 of Equation 6, a maximum amount of data transmission is affected by xi(t) for determining transmission of i-th data.

Meanwhile, xi(t) for determining data transmission may have a value of 0 or 1 in conditional expression C2 of Equation 6.

Meanwhile, an amount of data proportional to a strength of a communication signal of the first communication standard, such as Wi-Fi, may be transmitted during timeslot 1 in conditional expression C3 of Equation 6.

Meanwhile, in conditional expressions C4 and C5 of Equation 6, it is required to determine transmission of data, which is transmitted to the server 400 or the mobile terminal 800, before a validity period of the data expires.

As a result, the handover selector 1210 may reduce cost by minimizing the amount of data transmission based on the second communication standard, such as cellular, by using Equation 5, and may maximize the amount of data transmission based on the first communication standard, such as Wi-Fi, by using Equation 6.

Further, when switching from the first communication module 120a to the second communication module 120b, the handover selector 1210 may reduce the possibility of incurring charges by minimizing a remaining amount of data to be transmitted at the next time step.

FIG. 14A is a diagram illustrating a timeslot.

Referring to the drawing, DT(a) in a timeslot is a section for network selection, and DT(b) in a timeslot is a section for selection of data to be transmitted.

In the section DT(a) for network selection in the timeslot, the handover selector 1210 may select, based on the following Equation 7, any one of the first communication module 120a configured to perform communication in the unlicensed frequency band based on the first communication standard and the second communication module 120b configured to perform communication in the licensed frequency band based on the second communication standard.

[Equation 7]

$$d_w \leq \min(s_i(t)), \; y(t) = 1$$

Meanwhile, in the case in which $y(t)=0$, the handover selector 1210 or the packet path controller 1220 may determine or select to maximize the amount of data transmission of vehicle data in the condition where data freshness is satisfied.

Meanwhile, in the case in which $y(t)=1$, the handover selector 1210 or the packet path controller 1220 may determine or select to minimize the size of transmitted vehicle data in the condition where data freshness is satisfied.

Meanwhile, in the case in which $y(t)$ in Equation 7 is 0, the handover selector 1210 may select the first communication module 120a, such as Wi-Fi, so as to maximize the amount of data transmission.

Meanwhile, in the case in which $y(t)$ in Equation 7 is 1, the handover selector 1210 may select the second communication module 120b, such as cellular, so as to minimize the size of transmitted data.

FIG. 14B is a diagram illustrating a strength GRb of a communication signal of a first communication standard and a strength GRa of a communication signal of a second communication standard.

Referring to the drawing, the first communication module 120a, such as Wi-Fi, may calculate the strength GRb of the communication signal of the first communication standard, and may transmit information about the calculated strength GRb to the handover selector 1210.

Meanwhile, the second communication module 120b, such as cellular, may calculate the strength GRa of the communication signal of the second communication standard, and may transmit information about the calculated strength GRa to the handover selector 1210.

While transmitting vehicle data to the server 400 or the mobile terminal 800 through the second communication module 120b, the handover selector 1210 may determine switching to the first communication module 120a based on the strength GRb of the communication signal of the first communication standard.

Alternatively, while transmitting the vehicle data to the server 400 or the mobile terminal 800 through the first communication module 120a, in the case in which the strength GRb of the communication signal of the first communication standard decreases, the handover selector 1210 may determine switching to the second communication module 120b based on the strength GRb of the communication signal of the first communication standard or the strength GRa of the communication signal of the second communication standard.

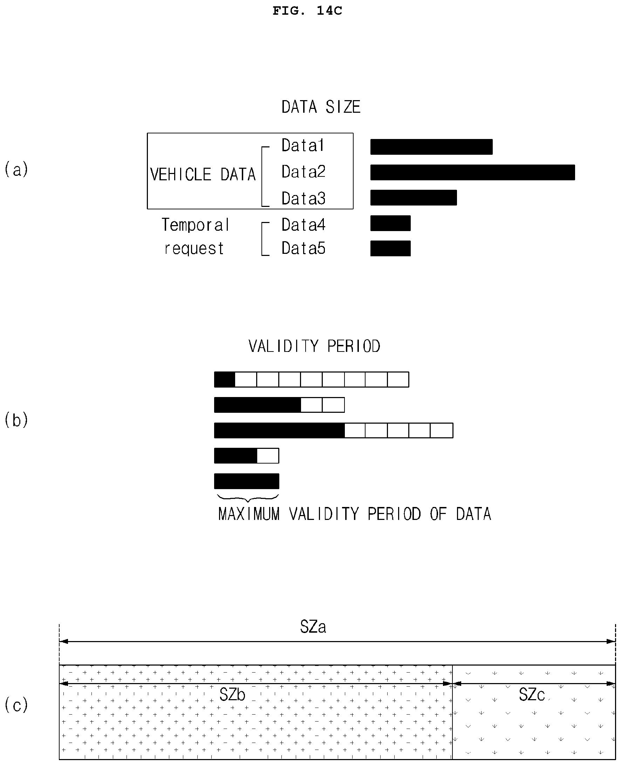

FIG. 14C is a diagram illustrating a plurality of data Data1 to Data5 and validity periods of the respective data.

Referring to the drawing, some data Data1 to Data3 among the plurality of data Data1 to Data5 may be vehicle data, and other data Data4 and Data5 may be temporal requests, as illustrated in (a) of FIG. 14C.

The plurality of data Data1 to Data5 may have different validity periods as illustrated in (b) of FIG. 14C.

As illustrated in (c) of FIG. 14C, the handover selector 1210 may select vehicle data to be transmitted, a size of the data corresponding to a size Szb, except a temporal request size Szc, within a maximum size Sza that can be transmitted during time slot 1 through the first communication module 120a or the second communication module 120b.

That is, the handover selector 1210 may select the plurality of data Data1 to Data3 of a size within the transmittable data size Szb.

Further, the handover selector 1210 may select any one of the first communication module 120a and the second communication module 120b based on the selected data Data1 to Data3 to be transmitted. Accordingly, external transfer of vehicle data may be efficiently performed. In addition, cost for external transfer of vehicle data may be minimized.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

**Claims**

1. A signal processing device in a vehicle comprising:

   a first interface configured to exchange data with a first communication module to perform communication of a first communication standard based on an unlicensed frequency band;
   a second interface configured to exchange data with a second communication module to perform communication of a second communication standard based on a licensed frequency band; and
   a handover selector configured to, while transmitting vehicle data to a server or a mobile terminal through the second communication module, determine switching to the first communication module based on a strength of a communication signal of the first communication standard.

2. The signal processing device of claim 1, wherein in the case in which communication based on the first communication standard is available based on the strength of the communication signal of the first communication standard, the handover selector is configured to determine switching to the first communication module for a packet transmitted based on the second communication standard to be transmitted based on the first communication standard.

3. The signal processing device of claim 1, further comprising a packet path controller configured to transmit the packet, transmitted based on the second communication standard, based on the first communication standard through the first interface.

4. The signal processing device of claim 1, further comprising a packet converter configured to convert a header of the packet, transmitted based on the second communication standard, into interface data based on the first communication standard.

5. The signal processing device of claim 1, wherein in the case in which the first communication module is activated based on switching to the first communication standard by the handover selector, an application for transmitting the vehicle data is configured to connect the server or the mobile terminal to a session.

6. The signal processing device of claim 1, wherein when switching from the second communication module to the first communication module, the handover selector is configured to maintain a session of the second communication standard.

7. The signal processing device of claim 1, wherein after switching from the second communication module to the first communication module, the handover selector is configured to determine switching back from the first communication module to the second communication module based on a strength of a communication signal of the second communication standard or the strength of the communication signal of the first communication standard.

8. The signal processing device of claim 7, further comprising a packet path controller configured to, in response to switching back from the first communication module to the second communication standard, transmit the packet using the maintained session of the second communication standard.

9. The signal processing device of claim 1, wherein the handover selector is configured to determine switching to the first communication module based further on at least one of the strength of the communication signal of the second communication standard, a remaining amount of the vehicle data or a validity period of the vehicle data.

10. The signal processing device of claim 1, wherein when selecting vehicle data to be transmitted, the handover selector is configured to select the data to be transmitted within a maximum size transmittable in a time slot.

11. The signal processing device of claim 1, wherein in the case in which the validity period of the vehicle data to be transmitted is not met while transmitting the vehicle data using the first communication module after switching to the first communication module, the handover selector is configured to determine switching again from the first communication module to the second communication module.

12. The signal processing device of claim 1, wherein the handover selector is configured to select the first communication module or the second communication module based on the validity period of the vehicle data to be transmitted.

13. The signal processing device of claim 1, wherein the packet path controller is configured to control an amount of data, which is proportional to the strength of the communication signal of the first communication standard, to be transmitted in the time slot.

14. A signal processing device in a vehicle comprising:

a first interface configured to exchange data with a first communication module to perform communication of a first communication standard based on an unlicensed frequency band;
a second interface configured to exchange data with a second communication module to perform communication of a second communication standard based on a licensed frequency band; and
a handover selector configured to, while transmitting vehicle data to a server or a mobile terminal through the first communication module, determine switching to the second communication module based on a validity period of the vehicle data.

15. The signal processing device of claim 14, wherein in the case in which the validity period of the vehicle data is not met while transmitting the vehicle data using the first communication module, the handover selector is configured to determine switching from the first communication module to the second communication module.

16. The signal processing device of claim 14, further comprising a packet path controller configured to control a packet, transmitted based on the first communication standard, to be transmitted based on the second communication standard through the second interface.

17. The signal processing device of claim 14, further comprising a packet converter configured to convert interface data, transmitted based on the first communication standard, into a header of a packet based on the second communication standard.

18. The signal processing device of claim 14, wherein while transmitting the vehicle data using the first communication module, an application for transmitting the vehicle data is configured to connect the server or the mobile terminal to a session.

19. A vehicle communication device comprising:

a first communication module configured to perform communication of a first communication standard based on an unlicensed frequency band;
a second communication module configured to perform communication of a second communication standard based on a licensed frequency band; and
the signal processing device of any one of claims 1 to 18.

## FIG. 1

FIG. 2A

300a

**FIG. 2B**

300b

**FIG. 2C**

300c

FIG.3

FIG. 4A

FIG. 4B

100

FIG. 5

FIG.6

FIG.7

700

170

610

620

Body

614

Chassis

616

CAN
Diagnostic
Tester

618

CAN
ECU

MCU

732a

IPC Mngr

735a

Cache

734a

738a

White
List

736a

CAN
Transceiver

508

Shared
Memory

High Prio

Normal Prio

PTa  PTb

AP

IPC Mngr

Cache

Timer

White
List

Ethernet
Switch

732b

735b

734b

737

738b

736b

TCU

622

HU

624

Ethernet
Diagnostic
Tester

626

Ethernet
ECU

CAN Signal

Ethernet Message

EP 4 531 450 A1

31

FIG. 8

FIG. 9

FIG. 10

```
                    ┌──────────┐
                    │  START   │
                    └────┬─────┘
                         │
                         ▼                              S1010
        NO      ◇─────────────────────────◇
       ◄────────  IS FIRST COMMUNICATION
       │          STANDARD AVAILABLE?
       │        ◇─────────────────────────◇
       │                  │ YES
       │                  ▼
       │        ┌──────────────────────────────┐
       │        │ CONTROL PACKET, TRANSMITTED   │
       │        │ BASED ON SECOND COMMUNICATION │   S1020
       │        │ STANDARD, TO BE TRANSMITTED   │
       │        │ BASED ON FIRST COMMUNICATION  │
       │        │ STANDARD                      │
       │        └──────────────┬───────────────┘
       │                       │
       │                       ▼              S1030
       │        ◇─────────────────────────────◇
       │          IS SWITCHING PERFORMED FROM      NO
       │          FIRST COMMUNICATION STANDARD  ─────────┐
       │          TO SECOND COMMUNICATION                │
       │          STANDARD?                              │
       │        ◇─────────────────────────────◇         │
       │                       │ YES                     │
       └───────────────────────┤                         │
                               ▼                          │
                ┌──────────────────────────────┐         │
                │ TRANSMIT DATA BASED ON SECOND │         │
                │ COMMUNICATION STANDARD USING  │  S1040   │
                │ MAINTAINED SESSION            │         │
                └──────────────┬───────────────┘         │
                               │◄────────────────────────┘
                               ▼
                         ┌──────────┐
                         │   END    │
                         └──────────┘
```

FIG. 11

FIG. 12

FIG. 13

FIG. 14A

FIG. 14B

FIG. 14C

DATA SIZE

(a)

| VEHICLE DATA | Data1 |
| | Data2 |
| | Data3 |

Temporal request — Data4 / Data5

VALIDITY PERIOD

(b)

MAXIMUM VALIDITY PERIOD OF DATA

(c)

SZa

SZb

SZc

| INTERNATIONAL SEARCH REPORT | International application No. |
|---|---|
| | **PCT/KR2023/000058** |

**A.    CLASSIFICATION OF SUBJECT MATTER**

**H04W 28/02**(2009.01)i; **H04W 36/14**(2009.01)i; **H04W 36/36**(2009.01)i; **H04W 88/06**(2009.01)i

According to International Patent Classification (IPC) or to both national classification and IPC

**B.    FIELDS SEARCHED**

Minimum documentation searched (classification system followed by classification symbols)

H04W 28/02(2009.01); H04L 12/741(2013.01); H04L 12/931(2013.01); H04L 29/12(2006.01); H04L 47/00(2022.01); H04W 4/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 통신 모듈(communication module), 신호(signal), 세기(strength), 핸드오버 (handover)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2015-0006929 A (HYUNDAI MOBIS CO., LTD.) 20 January 2015 (2015-01-20)<br>See paragraphs [0017]-[0044] and figure 2. | 1-9,19 |
| A | | 10-18 |
| Y | BUSANELLI, Stefano et al. Vertical Handover between WiFi and UMTS Networks: Experimental Performance Analysis. International Journal of Energy, Information and Communications. Vol. 2, Issue 1, February 2011. ResearchGate. 05 June 2014.<br>See abstract and pages 75-94. | 1-9,19 |
| Y | KR 10-2021-0049335 A (SAMSUNG ELECTRONICS CO., LTD.) 06 May 2021 (2021-05-06)<br>See paragraphs [0006]-[0023] and figure 1. | 4 |
| A | KR 10-2020-0143780 A (HYUNDAI MOTOR COMPANY et al.) 28 December 2020 (2020-12-28)<br>See paragraphs [0038]-[0115] and figure 2. | 1-19 |

☑ Further documents are listed in the continuation of Box C.          ☑ See patent family annex.

| | |
|---|---|
| *      Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **24 May 2023** | **24 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/000058** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2019-0081945 A (YURA CORPORATION CO., LTD.) 09 July 2019 (2019-07-09)<br>See paragraphs [0038]-[0117] and figure 1. | 1-19 |

Form PCT/ISA/210 (second sheet) (July 2022)

INTERNATIONAL SEARCH REPORT
Information on patent family members

International application No.

**PCT/KR2023/000058**

| Patent document cited in search report | | | Publication date (day/month/year) | Patent family member(s) | | | Publication date (day/month/year) |
|---|---|---|---|---|---|---|---|
| KR | 10-2015-0006929 | A | 20 January 2015 | KR | 10-2146659 | B1 | 24 August 2020 |
| KR | 10-2021-0049335 | A | 06 May 2021 | US | 11483280 | B2 | 25 October 2022 |
| | | | | US | 2021-0126897 | A1 | 29 April 2021 |
| KR | 10-2020-0143780 | A | 28 December 2020 | CN | 112099464 | A | 18 December 2020 |
| | | | | US | 10992599 | B2 | 27 April 2021 |
| | | | | US | 2020-0396180 | A1 | 17 December 2020 |
| KR | 10-2019-0081945 | A | 09 July 2019 | KR | 10-2022-0141271 | A | 19 October 2022 |
| | | | | KR | 10-2022-0166762 | A | 19 December 2022 |
| | | | | KR | 10-2474720 | B1 | 06 December 2022 |

Form PCT/ISA/210 (patent family annex) (July 2022)

**REFERENCES CITED IN THE DESCRIPTION**

**Patent documents cited in the description**

- KR 101680278